# FASCICULE DE BREVET EUROPEEN

(11) **EP 0 665 401 B1**
(45) Date de publication et mention de la délivrance du brevet: **09.04.1997**
(21) Numéro de dépôt: 95400092.3
(22) Date de dépôt: 18.01.1995
(51) Int. Cl.: F16L 37/084

(54) **Connexion rapide**
Schnellverbindung
Quick acting coupling

(30) Priorité: 26.01.1994 FR 9400829
(43) Date de publication de la demande: 02.08.1995
(73) Titulaire: ETABLISSEMENTS CAILLAU, Société anonyme à Directoire et Conseil de Surveillance, F-92130 Issy-Les-Molineaux (FR)
(72) Inventeur: Viratelle, Henri, F-89250 Mont Saint Sulpice (FR); Andre, Michel, F-41200 Romorantin (FR)
(74) Mandataire: Hasenrader, Hubert

(56) Documents cités:
- EP-A- 0 364 380
- EP-A- 0 484 690
- WO-A-93/20379
- FR-A- 2 705 133
- GB-A- 2 174 163

## Description

On connaît déjà divers types de connexion rapide d'un tube rigide emmanché dans un embout pour y être verrouillé axialement et assurer, en outre, un raccordement étanche de deux canalisations véhiculant un fluide tel que du carburant.

La demande de brevet français, déposée par la demanderesse le 10 mai 1993 et publiée sous le numéro FR-A-2705133 divulgue, pour un tube qui présente un renflement annulaire distant de son extrémité, une connexion dont l'embout présente un logement interne, destiné à recevoir au moins un joint annulaire d'étanchéité et prévu dans une région qui, lorsque le tube est emmanché dans l'embout, se trouve en regard de la zone dudit tube située entre son extrémité et le renflement. Cet embout comporte un organe de verrouillage comprenant des moyens de verrouillage élastiquement déformables dans le sens radial entre une configuration à l'état libre et une configuration de déverrouillage.

Les moyens de verrouillage peuvent adopter une configuration de verrouillage, généralement intermédiaire entre leur configuration à l'état libre et leur configuration de déverrouillage, dans laquelle ils prennent appui sur le renflement du tube, du côté opposé à son extrémité.

Une telle connexion connue donne satisfaction sur le plan technique. Toutefois, l'extraction du tube hors de l'embout après verrouillage nécessite l'utilisation d'un outil spécifique qui doit être inséré entre le tube et les moyens élastiques de verrouillage. Cette opération est délicate et ne peut être menée à bien que si l'espace autour du tube et de la connexion est suffisant pour permettre l'utilisation d'un outil.

La présente invention a pour but d'améliorer encore les connexions connues en remédiant aux inconvénients précités.

Dans ce but, la périphérie externe de l'embout présente une première partie cylindrique, délimitée vers l'entrée de l'embout, c'est-à-dire vers l'avant, par des moyens de butée axiale, et une deuxième partie s'étendant entre les moyens de butée axiale et l'entrée de l'embout.

L'organe de verrouillage comporte une bague susceptible de prendre appui sur les moyens de butée axiale.

Les moyens de verrouillage comportent au moins une patte de verrouillage s'étendant vers l'avant à partir de la bague et comprenant une première portion, raccordée à la bague et de longueur au moins égale à la longueur de la deuxième partie de l'embout, et une deuxième portion constituée par un prolongement avant de ladite première portion et comprenant, d'avant en arrière, une rampe avant inclinée vers l'intérieur et une fente transversale dont la dimension axiale est au moins égale à la dimension axiale du renflement du tube et dont la distance à l'axe de l'embout est, à l'état libre de la patte de verrouillage, inférieure au rayon extérieur dudit renflement.

Des moyens d'écartement liés à l'embout, susceptibles d'être mis en oeuvre à la main, sans outil, sont prévus pour amener la patte de verrouillage dans sa configuration de déverrouillage, dans laquelle la distance de la fente à l'axe de l'embout est au moins égale au rayon du renflement du tube.

Le nombre des pièces qui constituent la connexion est limité, ce qui en rend la réalisation industrielle aisée et économique. La bague de l'organe de verrouillage se situe sur la première partie cylindrique de la périphérie externe de l'embout et peut prendre appui sur les moyens de butée axiale. Comme on le verra dans la suite, cette bague peut être montée fixe ou coulissante.

Lorsque l'on emmanche le tube dans l'embout, la rampe avant de la patte de verrouillage, inclinée vers l'intérieur, coopère avec le renflement de ce tube pour écarter la patte. Lorsque l'on aura suffisamment emmanché le tube dans l'embout et que la fente se trouvera au niveau axial du renflement, la patte de verrouillage se rapprochera élastiquement de sa configuration à l'état libre en laissant le renflement pénétrer dans la fente, dont la dimension axiale est suffisante. La patte adoptera naturellement, sous l'effet de son élasticité, sa configuration de verrouillage, dans laquelle le bord avant de la fente coopère avec le renflement pour empêcher tout désengagement du tube et de l'embout sous l'effet d'une traction visant à éloigner ces deux éléments.

Comme on le verra dans la suite, les moyens d'écartement liés à l'embout pourront être mis en oeuvre de manière simple, sans obligatoirement nécessiter l'intervention d'un outil. Toutefois, pour remplir les conditions de sécurité, l'écartement résultera toujours d'un effort appliqué par l'utilisateur, jamais de façon fortuite.

L'invention sera bien comprise et ses avantages, ainsi que ses caractéristiques secondaires, apparaîtront mieux au cours de la description détaillée qui suit, de deux modes de réalisation indiqués à titre d'exemples non limitatifs. Cette description se réfère aux dessins annexés sur lesquels:
- la figure 1 est une perspective éclatée des divers éléments constitutifs de la connexion,
- la figure 2 est une coupe longitudinale de la connexion sans le tube, montrant les moyens de verrouillage dans leur configuration à l'état libre,
- la figure 3 est une coupe analogue à celle de la figure 2, illustrant la configuration des moyens de verrouillage lors de l'emmanchement du tube dans l'embout,
- la figure 4 est une coupe analogue à celles des figures 2 et 3, montrant les moyens de verrouillage dans leur configuration de verrouillage,
- la figure 5 est une coupe selon la ligne V-V de la figure 4,
- la figure 6 est une coupe analogue à celles des figures 2 à 4, montrant la configuration des moyens de verrouillage lorsqu'un effort de traction visant à séparer la connexion et l'embout est exercé,
- la figure 7 est une coupe analogue aux figures 2 à 4 et 6, lors du déverrouillage de la connexion,
- la figure 8 montre, en élévation, l'organe de verrouillage selon un premier mode de réalisation,
- la figure 9 est une vue de dessus de la figure 8,
- la figure 10 est une vue en coupe d'une connexion verrouillée, munie d'un organe de verrouillage selon un second mode de réalisation,
- la figure 11 est une coupe analogue à la figure 10 lors du déverrouillage de l'organe de verrouillage,
- la figure 12 montre en élévation l'organe de verrouillage selon le second mode de réalisation,
- la figure 13 est une vue de dessus de la figure 12.

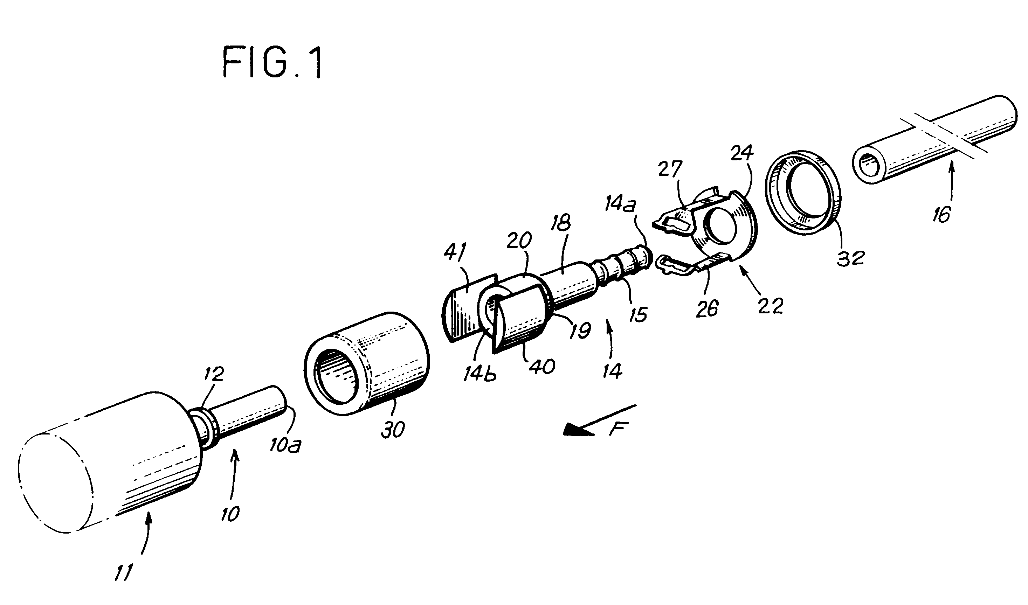

La figure 1 montre une connexion qui comporte un tube 10, présentant un renflement annulaire 12 distant de son extrémité 10a et pouvant, par exemple, se trouver à l'entrée d'un carburateur 11.

En outre, la connexion comprend un embout 14 destiné à être enfilé sur le tube 10.

Vers son extrémité 14a opposée au tube 10, l'embout peut présenter une zone 15 dont la périphérie externe est conformée en raccord "sapin", destinée à être emmanchée dans un tuyau souple 16, tel qu'une conduite de carburant.

On admet que la direction "vers l'avant" est celle, indiquée par la flèche F de la figure 1, qui va de l'extrémité de l'embout opposée au tube, à l'entrée de cet embout. La direction "vers l'arrière" est bien sûr la direction opposée. Le sens "vers l'intérieur" est celui qui se rapproche de l'axe du tube ou de l'embout, le sens "vers l'extérieur" étant celui qui s'en éloigne.

La périphérie externe de l'embout présente une première partie cylindrique 18 délimitée vers l'avant par des moyens de butée axiale 19, constitués ici par un épaulement, et une deuxième partie 20 qui s'étend entre ces moyens de butée axiale et l'entrée 14b de l'embout 14.

La connexion comporte un organe de verrouillage 22 qui comprend une bague 24, susceptible d'être enfilée sur la première partie 18 de la périphérie externe de l'embout et de prendre appui sur les moyens de butée axiale 19. L'organe de verrouillage 22 comporte deux pattes de verrouillage 26 et 27 élastiquement déformables.

De préférence, la connexion comporte également un manchon 30 destiné à coiffer l'embout 14 et une bague de sertissage 32 destinée à être sertie sur la bague 24 pour la protéger et en augmenter l'épaisseur.

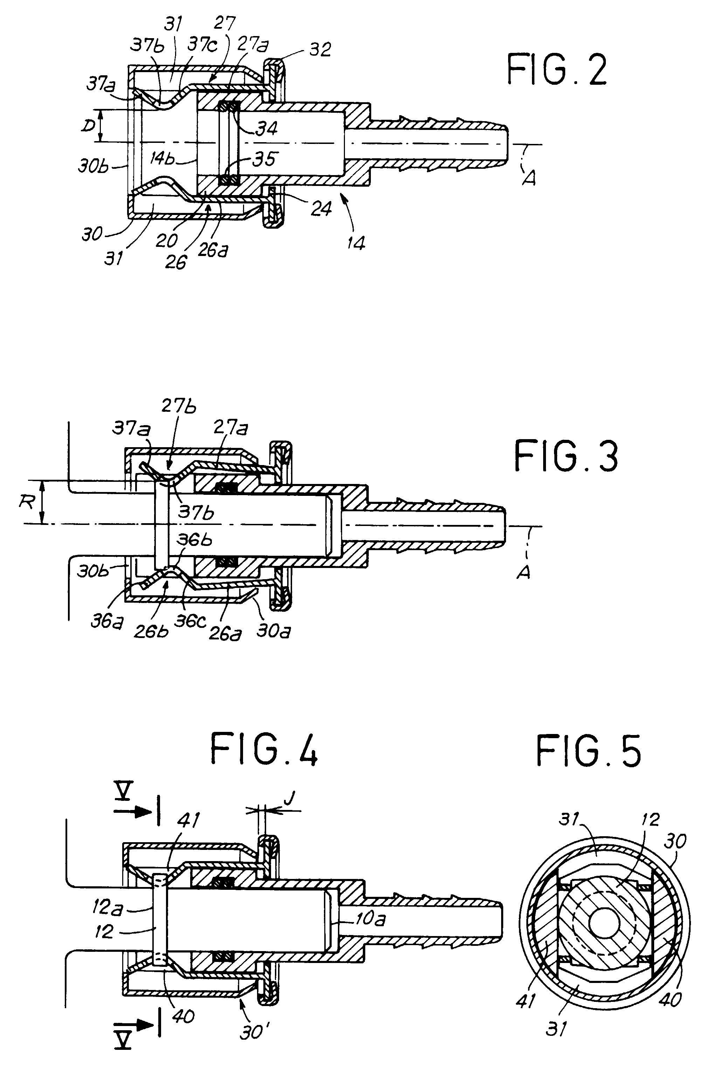

Dans toutes les vues en coupe longitudinale, on voit que l'embout 14 présente un logement interne 34 destiné à recevoir au moins un joint annulaire d'étanchéité 35. Comme le montre par exemple la figure 4, ce logement est prévu dans une région de l'embout qui, lorsque le tube 10 est emmanché dans cet embout, se trouve en regard de la zone située entre l'extrémité 10a de ce tube et le renflement annulaire 12.

Sur les vues en coupe, on constate également que le diamètre externe du tube est sensiblement égal au diamètre interne de l'embout.

Dans l'exemple représenté, le renflement 12 comporte une face avant 12a perpendiculaire à l'axe A, commun au tube et à l'embout lorsque la connexion est assemblée.

Sur les figures, l'organe de verrouillage comporte deux pattes, il peut n'en comporter qu'une seule ou davantage.

En référence aux figures 2 à 9, on décrit maintenant de manière plus précise la connexion selon un premier mode de réalisation de l'organe de verrouillage.

Pour alléger la description, on se placera dans le cas où l'organe de verrouillage comporte deux pattes de verrouillage, sans que cela puisse être considéré comme une restriction.

Les pattes de verrouillage 26 et 27 s'étendent vers l'avant à partir de la bague 24 et comprennent respectivement une première portion 26a, 27a et une deuxième portion 26b, 27b. La première portion 26a, 27a est raccordée à la bague 24 et sa longueur est au moins égale à la longueur de la deuxième partie 20 de l'embout 14. La deuxième portion 26b, 27b est constituée par un prolongement avant de la première portion 26a, 27a et comprend, d'avant en arrière, une rampe avant 36a, 37a inclinée vers l'intérieur et une fente transversale 36b, 37b.

Sur la figure 2, qui montre les pattes de verrouillage 26 et 27 dans leur configuration à l'état libre, on constate que la distance D de la fente 37b de la patte 27 à l'axe A de l'embout 14, ou la distance de la fente 36b de la patte 26 au même axe A, est inférieure au rayon extérieur R du renflement 12 du tube 10, indiqué sur la figure 3.

Comme le montrent les figures 4 et 5, la distance des fentes à l'axe de l'embout reste inférieure au rayon du renflement dans la configuration de verrouillage des pattes.

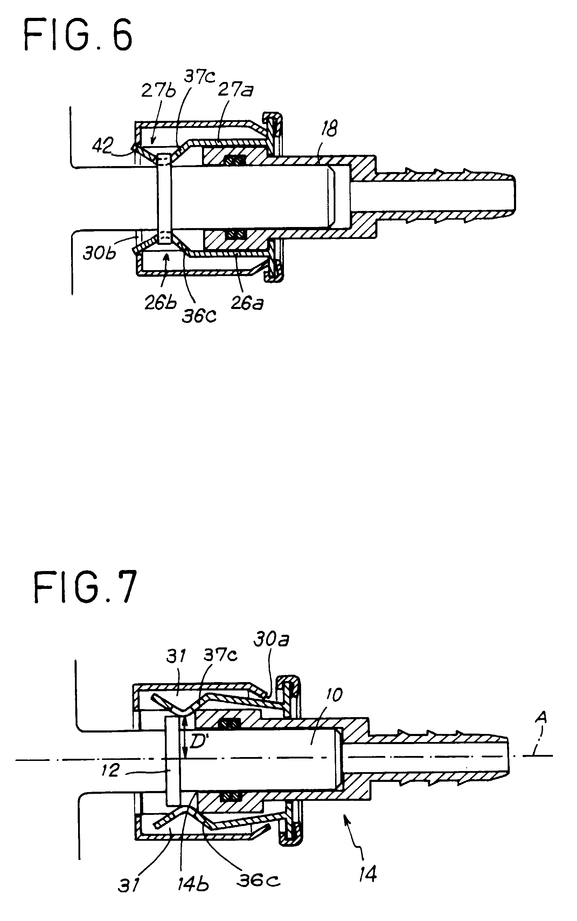

Des moyens d'écartement liés à l'embout sont prévus pour ramener les pattes de verrouillage dans leur configuration de déverrouillage. Comme on le voit sur la figure 7, dans cette configuration de déverrouillage, la distance D' de la fente 37b à l'axe A de l'embout 14 est au moins égale au rayon R du renflement 12 du tube 10. Ceci vaut également pour la distance de la fente 36b au même axe A.

Ces moyens d'écartement seront décrits de manière plus précise dans la suite.

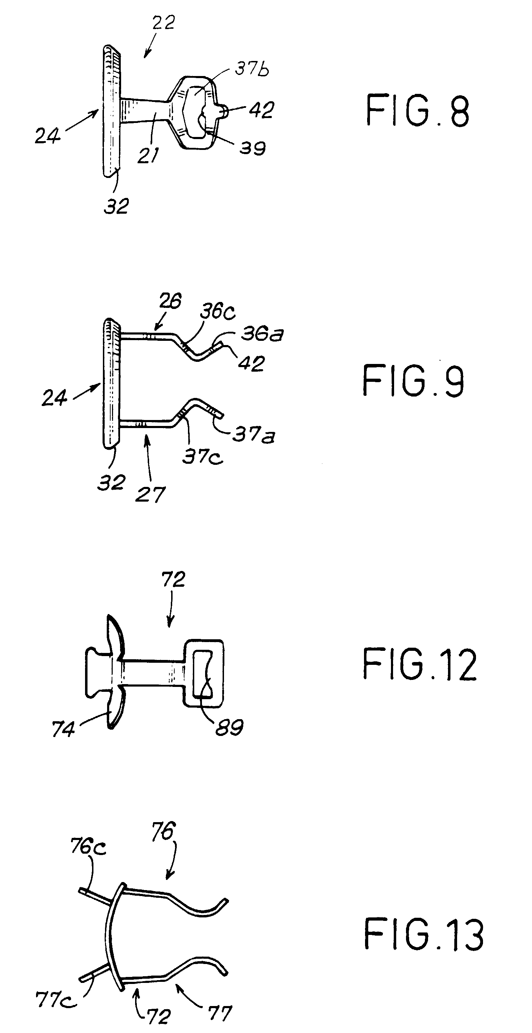

Comme le montre la figure 8, le bord avant de la fente 37b est avantageusement muni d'un ergot d'appui 39, s'étendant vers l'arrière. Le terme "ergot" est ici utilisé pour désigner de manière générale une incurvation du bord de la fente, de préférence située dans sa région centrale, comme l'incurvation 89 visible sur la figure 12.

La présence de l'ergot d'appui permet de réaliser un contact tangentiel ou sensiblement tangentiel entre le bord avant des fentes 36b ou 37b et la face avant 12a du renflement du tube 10. Ceci permet, lorsque l'on tire l'embout vers l'arrière par rapport au tube tout en le faisant tourner, d'empêcher que la face avant du renflement ne joue, pour le bord avant de la fente, le rôle d'une piste de guidage qui pourrait amener la patte de verrouillage à s'écarter de sa position de verrouillage.

La connexion comporte avantageusement un manchon 30, coiffant l'embout 14 et monté sur des moyens de support solidaires de ce dernier. Ce manchon s'étend axialement vers l'avant, au-delà de l'entrée 14b de l'embout, et présente lui-même une entrée 30b, dont le diamètre est au moins égal à celui du renflement 12 et qui est coaxiale à ladite entrée 14b.

L'embout 30 constitue ainsi un capot de protection et forme au moins une chambre 31, notamment visible sur la figure 5, apte à contenir et protéger chacune des pattes de verrouillage. Qu'elles se trouvent dans leur configuration à l'état libre, illustrée par la figure 2, dans leur configuration de verrouillage, illustrée par les figures 4 et 5, ou dans leur configuration de déverrouillage, illustrée par la figure 7, les pattes de verrouillage 26 et 27 restent protégées par le manchon 30.

De cette manière, les seuls éléments de l'organe de verrouillage susceptibles de dépasser hors du manchon sont soit des sécurités, comme on le verra dans la suite, soit des éléments mobiles permettant de mettre en oeuvre, par une manoeuvre précise, les moyens d'écartement des pattes.

Dans les exemples représentés, le manchon 30 est fixé axialement par rapport à l'embout 14, et les moyens de support de ce manchon comprennent au moins un prolongement avant de l'embout. En fait, les pattes de verrouillage étant ici au nombre de deux, on a représenté deux prolongements avant en forme de secteurs cylindriques, bien visibles sur la figure 1, sous les références 40 et 41, entre lesquels s'étendent les deuxièmes portions des pattes.

Ces prolongements 40 et 41 s'étendent axialement, vers l'avant, au-delà de l'entrée 14b de l'embout 14, sur une longueur au moins égale à la longueur de la deuxième portion 26b ou 27b des pattes de verrouillage. Les dimensions radiales externes des prolongements 40 et 41 sont supérieures à celles de la deuxième partie de l'embout, l'espace ainsi créé dans la région des prolongements, entre la périphérie interne du manchon 30 et la périphérie externe de la deuxième partie 20 de l'embout, constitue la chambre 31.

L'extrémité avant du manchon 30 est sertie sur les extrémités avant et arrière des prolongements 40 et 41.

Dans l'exemple représenté, les prolongements couvrent chacun environ un quart de la périphérie de la seconde partie de l'embout et sont situés en regard l'un de l'autre. On peut également ne prévoir qu'un seul prolongement avant qui couvrirait la moitié ou plus de cette périphérie. Dans ce cas, une seule chambre serait constituée pour la ou les patte(s) de verrouillage.

Selon un autre mode de réalisation non représenté, les prolongements avant peuvent s'étendre sur une distance moindre au-delà de l'entrée de l'embout et le manchon peut être axialement mobile, avec une extrémité avant repliée et une extrémité arrière sertie sur la bague 24 de l'organe de verrouillage. L'ensemble constitué par le manchon et l'organe de verrouillage des figures 2 à 9 serait ainsi axialement mobile, et la mise en oeuvre des moyens de verrouillage serait identique à celle qui sera décrite dans la suite, en référence aux figures 1 à 9.

Toutefois, dans l'exemple représenté sur ces figures à titre de mode de réalisation avantageux, seule la bague 24 est montée coulissante sur la première partie 18 de l'embout 14. Les prolongements avant 40 et 41 s'étendent le long de la deuxième partie 20 de l'embout, sur une partie au moins de la longueur axiale de cette seconde partie, et l'arrière du manchon 30 est sertie (en 30') sur l'extrémité arrière de ces prolongements, tout en laissant une place suffisante au passage des pattes de verrouillage et à leur mouvement par rapport à l'embout et au manchon fixe, lorsque l'on fait coulisser la bague. Les moyens de butée axiale peuvent donc être au choix constitués par l'épaulement 19 ou par l'extrémité arrière 30a du manchon 30.

La figure 3 montre la position des pattes de verrouillage lorsque le tube est emmanché dans l'embout. On constate sur cette figure que ces pattes s'écartent sous l'effet de la coopération entre les rampes avant 36a, 37a et le renflement annulaire 12 du tube ou, plus précisément, la face arrière de ce renflement.

La figure 4 montre les pattes de verrouillage dans leur configuration de verrouillage, dans laquelle le renflement 12 du tube est logé dans les fentes transversales 36b, 37b. On voit que, dans cette position, et lorsque la bague 24 est montée coulissante par rapport à l'embout 14 et au manchon, il subsiste un jeu j entre l'extrémité arrière du manchon 30 et la face avant de la bague 24.

La situation des divers éléments de la connexion, lorsque les moyens de verrouillage sont dans leur configuration de verrouillage, est également visible sur la figure 5.

Le jeu j peut être supprimé sous l'effet de la pression du fluide qui traverse la connexion, ou d'une manipulation d'un opérateur tentant de séparer le tube et l'embout par simple traction sur ce dernier. Le déverrouillage de la connexion est empêché par la coopération du bord avant de la fente 36b ou 37b, ou plus précisément de l'ergot 39, avec la face avant du renflement 12.

On peut cependant prévoir une sécurité complémentaire, constituée par un ergot avant 42 des pattes, mieux visible sur la figure 8. Cet ergot, qu'on appellera "ergot de retenue", s'étend vers l'avant, sur l'extrémité avant de la deuxième portion des pattes de verrouillage.

Comme on le voit sur la figure 6, lorsque le jeu j est supprimé, l'ergot de retenue 42 coopère avec le bord avant de l'entrée 30b du manchon 30 pour maintenir les pattes de verrouillage dans leur position verrouillée en les empêchant de s'écarter.

Dans le mode de réalisation illustré par les figures 2 à 9, la bague 24 est montée coulissante sur la première partie cylindrique 18 de l'embout 14. Dans ce cas, les moyens d'écartement comprennent une rampe arrière 36c ou 37c de chaque patte de verrouillage, inclinée vers l'extérieur à partir des fentes 36b, 37b.

Chacune des rampes arrière 36c et 37c est prévue sur la deuxième portion de la patte de verrouillage correspondante, 26 ou 27, du côté opposé à la rampe avant 36a ou 37a par rapport à la fente transversale 36b ou 37b. Pour chaque patte, la rampe arrière est raccordée à la première portion et, comme le montre la figure 7, est destinée à coopérer avec la périphérie externe de l'entrée 14b de l'embout 14 pour amener la patte dans sa configuration de déverrouillage, lors d'un déplacement relatif de la bague 24 et de l'embout conduisant à amener cette bague vers l'arrière.

Dans ce mode de réalisation, le déverrouillage est réalisé de façon simple, sans l'aide d'un outil, mais non pas de façon fortuite, puisque cette opération impose de maintenir l'embout vers l'avant, tout en déplaçant la bague coulissante vers l'arrière. De plus, lorsque l'ergot de retenue avant 42 est prévu, la situation de la figure 6 empêche tout déplacement de la bague vers l'arrière. Un tel déplacement ne sera possible qu'après être revenu à la situation de la figure 4 en poussant l'embout vers l'avant, avec le manchon et la bague.

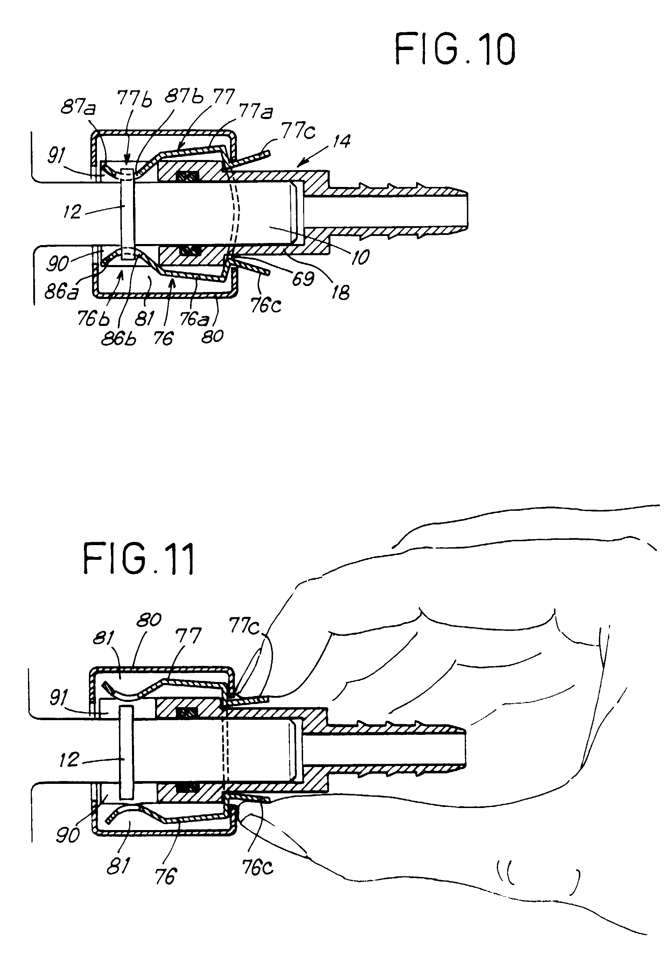

Les figures 10 à 13 montrent un deuxième mode de réalisation de la connexion, comportant des moyens d'écartement des pattes différents.

Sur ces figures, les éléments restés inchangés, tels que le tube et l'embout, conservent leurs références des figures 1 à 9, tandis que les éléments légèrement modifiés comme le manchon et l'organe de verrouillage recevront les mêmes références que sur les figures 1 à 9, augmentées de 50.

L'organe de verrouillage 72 comporte une bague 74 et deux pattes de verrouillage 76 et 77 qui comportent chacune une première portion 76a, 77a, une deuxième portion 76b, 77b, une rampe avant 86a, 87a et une fente transversale 86b, 87b.

La patte de verrouillage 77 est prolongée vers l'arrière, au-delà de la bague 74, par une patte de commande 77c, qui forme avec elle un ensemble relativement rigide. De même, la patte de verrouillage 76 peut comporter une patte de commande 76c analogue à la patte de commande 77c.

Dans sa configuration à l'état libre, ou dans sa configuration de verrouillage illustrée par la figure 10, l'extrémité arrière de la patte de commande 76c ou 77c se trouve écartée de la périphérie externe de la première partie 18 de l'embout 14.

Pour déverrouiller la connexion, il suffit, comme l'indique la figure 11, de rapprocher les pattes de commande de la périphérie externe de la première partie 18 de l'embout 14. Etant donnée la relative rigidité de l'ensemble constitué par l'ensemble de verrouillage, ce mouvement de rapprochement fait basculer les pattes de verrouillage autour d'un point fixe se trouvant au niveau de la bague 74 pour l'amener dans sa configuration écartée.

En fait, comme on le constate en comparant les figures 10 et 11, la bague 74 joue un effet ressort et est incurvée dans la direction axiale de l'embout dans la configuration à l'état libre de l'organe de verrouillage, tandis qu'elle peut être ramenée dans un plan radial comme sur la figure 11 pour déverrouiller la connexion.

On utilise l'expression "relativement rigide" pour indiquer que lorsque les pattes de commande sont ramenées vers la périphérie, leur point de raccord à la bague 74 ne constitue pas une zone de flexion, sans quoi aucun mouvement ne serait transmis aux pattes de verrouillage. Au contraire, l'angle entre les pattes de commande et le plan de la bague ne varie pas ou très peu, ce qui permet, en ramenant cette bague dans un plan radial, d'écarter les pattes de verrouillage.

Le point fixe de basculement se situe aux alentours du point de rattachement des pattes de commande et de la bague 74. Comme le montre la figure 10, ce point de rattachement se trouve sensiblement au niveau de la périphérie interne de la bague 74, tandis que les pattes de verrouillage sont raccordées à proximité de la périphérie externe de cette bague.

Les moyens de butée axiale de la bague 74 peuvent être constitués par l'épaulement 19 précité de la périphérie externe de l'embout 14. L'extrémité arrière du manchon 80 peut être sertie sur la bague, de manière à la bloquer contre cet épaulement 19. Le point fixe de basculement est défini, pour chaque ensemble constitué par une patte de verrouillage et la patte de commande alignée, par la portion de la bague 74 ainsi maintenue fixe.

## Revendications

1. Connexion rapide d'un tube (10) susceptible d'être emmanché dans un embout (14), ledit tube présentant un renflement annulaire (12) distant de son extrémité (10a), cependant que l'embout présente un logement interne (34), destiné à recevoir au moins un joint annulaire d'étanchéité (35) et prévu dans une région qui, lorsque le tube (10) est emmanché dans l'embout (14), se trouve en regard de la zone dudit tube située entre son extrémité (10a) et le renflement (12), et que cet embout comporte un organe de verrouillage (22, 72) comprenant des moyens de verrouillage (26, 27 ; 76, 77) élastiquement déformables dans le sens radial entre une configuration à l'état libre et une configuration de déverrouillage,
caractérisée en ce que la périphérie externe de l'embout (14) présente une première partie cylindrique (18), délimitée vers l'entrée (14b) de l'embout, c'est-à-dire vers l'avant, par des moyens de butée axiale (19, 30a), et une deuxième partie (20) s'étendant entre les moyens de butée axiale et l'entrée de l'embout (14),
en ce que l'organe de verrouillage (22 ; 72) comporte une bague (24 ; 74) susceptible de prendre appui sur les moyens de butée axiale (19, 30a),
en ce que les moyens de verrouillage comportent au moins une patte de verrouillage (26, 27 ; 76, 77) s'étendant vers l'avant à partir de ladite bague (24 ; 74) et comprenant une première portion (26a, 27a ; 76a, 77a), raccordée à la bague et de longueur au moins égale à la longueur de la deuxième partie (20) de l'embout (14), et une deuxième portion (26b, 27b ; 76b, 77b) constituée par un prolongement avant de ladite première portion (26a, 27a ; 76a, 77a) et comprenant, d'avant en arrière, une rampe avant (36a, 37a ; 86a, 87a) inclinée vers l'intérieur et une fente transversale (36b, 37b ; 86b, 87b) dont la dimension axiale est au moins égale à la dimension axiale du renflement (12) du tube (10) et dont la distance (D) à l'axe (A) de l'embout (14) est, à l'état libre de la patte de verrouillage (26, 27 ; 76, 77), inférieure au rayon extérieur (R) dudit renflement (12), et
en ce que des moyens d'écartement (36c, 37c ; 76c, 77c) liés à l'embout (14) sont prévus pour amener la patte de verrouillage (26, 27 ; 76, 77) dans sa configuration de déverrouillage, dans laquelle la distance (D') de la fente (36b, 37b ; 86b, 87b) à l'axe (A) de l'embout (14) est au moins égale audit rayon (R) du renflement (12) du tube (10).

2. Connexion selon la revendication 1, caractérisée en ce que le bord avant de la fente (36b, 37b ; 86b, 87b) est muni d'un ergot d'appui (39 ; 89) s'étendant vers l'arrière.

3. Connexion selon l'une des revendications 1 et 2, caractérisée en ce qu'elle comporte un manchon (30 ; 80) coiffant l'embout (14) et monté sur des moyens de support (40, 41; 90, 91) solidaires de ce dernier, ce manchon (30; 80) s'étendant axialement vers l'avant au-delà de l'entrée (14b) de l'embout (14), et présentant une entrée (30b) coaxiale à celle dudit embout (14), en formant ainsi une chambre (31 ; 81) apte à contenir la patte de verrouillage (26, 27 ; 76, 77) dans toutes ses configurations.

4. Connexion selon la revendication 3, caractérisé en ce que le manchon (30 ; 80) est fixé axialement par rapport à l'embout (14) et en ce que les moyens de support dudit manchon comprennent au moins un prolongement avant (40, 41 ; 90, 91) de l'embout (14) s'étendant axialement vers l'avant au-delà de l'entrée (14b) dudit embout, sur une distance au moins égale à la longueur de la deuxième portion (26b, 27b ; 76b, 77b) de la patte de verrouillage et présentant des dimensions radiales externes supérieures à celles de la deuxième partie (20) de l'embout (14) pour définir le logement (31 ; 81) de la patte de verrouillage (26, 27 ; 76, 77), l'extrémité avant du manchon (30 ; 80) étant sertie sur l'extrémité avant dudit prolongement avant (40, 41; 90, 91).

5. Connexion selon la revendication 4, caractérisée en ce que la bague (24) est montée coulissante sur la première partie (18) de l'embout (14), et en ce que l'arrière du manchon est serti (30') sur l'extrémité arrière du prolongement avant (40, 41).

6. Connexion selon l'une quelconque des revendications 4 et 5, caractérisée en ce que l'extrémité avant de la deuxième portion (26b, 27b) de la patte de verrouillage (26, 27) présente un ergot de retenue (42) s'étendant vers l'avant, susceptible de coopérer avec le bord de l'entrée (30b) du manchon (30) pour maintenir la patte de verrouillage dans sa position verrouillée.

7. Connexion selon l'une quelconque des revendications 1 à 6, caractérisée en ce que la deuxième portion (26b, 27b) de la patte de verrouillage (26, 27) comporte, du côté opposé à la rampe avant (36a, 37a) par rapport à la fente transversale (36b, 37b), une rampe arrière (36c, 37c) inclinée vers l'extérieur, raccordée à la première portion (26a, 27a), et destinée à coopérer avec la périphérie externe de l'entrée de l'embout (14b) pour amener ladite patte dans sa configuration de déverrouillage.

8. Connexion selon l'une quelconque des revendications 1 à 6, caractérisée en ce que la patte de verrouillage (76, 77) est prolongée, au-delà de la bague (74) par une patte de commande (76c, 77c) qui forme avec ladite patte de verrouillage un ensemble relativement rigide, l'extrémité de ladite patte de commande (76c, 77c) se trouvant écartée de la périphérie externe de la première partie (18) de l'embout (14) dans la configuration à l'état libre de la patte de verrouillage (76, 77).

9. Connexion selon les revendications 4 et 8, caractérisée en ce que les moyens de butée axiale de la bague sont constitués par un épaulement (19) de la périphérie externe de l'embout (14), et en ce que l'extrémité arrière du manchon (80) est sertie sur la bague (74), de manière à bloquer ladite bague contre ledit épaulement.

## Patentansprüche

1. Schnellverbindung für ein in ein Anschlußstück (14) einsteckbares Rohr (10), das im Abstand von seinem Ende (10a) einen kreisringförmigen Wulst (12) aufweist, wogegen das Anschlußstück eine innere Aufnahme (34) aufweist, die wenigstens einen kreisringförmigen Dichtring (35) aufzunehmen vermag und in einem Bereich vorgesehen ist, der sich nach dem Einstecken des Rohres (10) in das Anschlußstück (14) vor dem Bereich des genannten Rohres befindet, der sich zwischen seinem Ende (10a) und dem Wulst (12) erstreckt, und wobei dieses Anschlußstück ein Verriegelungsorgan (22, 72) mit Verriegelungsmitteln (26, 27; 76, 77) aufweist, die in radialer Richtung zwischen einer Konfiguration im freien Zustand und einer Konfiguration im verriegelten Zustand elastisch verformbar sind,
dadurch gekennzeichnet, daß
der Außenumfang des Anschlußstückes (14) einen ersten zylindrischen Abschnitt (18), der zur Einführungsöffnung (14b) des Anschlußstückes hin, d.h. nach vorn, von Axialanschlägen (19, 30a) begrenzt ist, und einen zweiten Abschnitt (20) umfaßt, der sich zwischen den Axialanschlägen und der Einführungsöffnung des Anschlußstückes (14) erstreckt,
das Verriegelungsorgan (22; 72) einen Ring (24; 74) aufweist, der an den Axialanschlägen (19, 30a) abstützbar ist,
die Verriegelungsmittel wenigstens eine Verriegelungszunge (26, 27; 76, 77) aufweisen, die sich von dem genannten Ring (24; 74) aus nach vorn erstreckt und einen ersten Abschnitt (26a, 27a; 76a, 77a), der mit dem Ring verbunden und von einer Länge ist, die wenigstens gleich der Länge des zweiten Abschnitts (20) des Anschlußstückes (14) ist, und einen zweiten Abschnitt (26b, 27b; 76b, 77b) umfaßt, der von einem vorderen Verlängerungsstück des genannten ersten Abschnitts (26a, 27a; 76a, 77a) gebildet ist und, von vorn nach hinten, eine nach innen schräge vordere Rampe (36a, 37a; 86a, 87a) und einen quergerichteten Schlitz (36b, 37b; 86b, 87b) aufweist, dessen axiale Erstreckung wenigstens gleich ist der axialen Erstreckung des Wulstes (12) vom Rohr (10) und dessen Abstand (D) von der Achse (A) des Anschlußstückes (14) im freien Zustand der Verriegelungszunge (26, 27; 76, 77) kleiner als der Außenradius (R) des genannten Wulstes (12) ist, und
mit dem Anschlußstück (14) verbundene Spreizmittel (36c, 37c; 76c, 77c) vorgesehen sind, um die Verriegelungszunge (26, 27; 76, 77) in ihre Konfiguration des entriegelten Zustands zu verbringen, in welcher der Abstand (D') des Schlitzes (36b, 37b; 86b, 87b) von der Achse (A) des Anschlußstükkes (14) wenigstens gleich ist dem genannten Radius (R) des Wulstes (12) vom Rohr (10).

2. Verbindung nach Anspruch 1,
dadurch gekennzeichnet, daß der vordere Rand des Schlitzes (36b, 37b; 86b, 87b) mit einem sich nach hinten erstreckenden Stützansatz (39; 89) versehen ist.

3. Verbindung nach einem der Ansprüche 1 und 2,
dadurch gekennzeichnet, daß sie eine Hülse (30; 80) aufweist, die sich über das Anschlußstück (14) stülpt und auf mit diesem fest verbundenen Stützorganen (40, 41; 90, 91) angeordnet ist, wobei sich diese Hülse (30; 80) in Achsenrichtung nach vorn über die Einführungsöffnung (14b) des Anschlußstückes (14) hinaus erstreckt und eine Einführungsöffnung (30b) aufweist, die mit der des Anschlußstückes (14) gleichachsig ist, dabei eine Kammer (31; 81) bildet, welche die Verriegelungszunge (26, 27; 76, 77) in allen ihren Konfigurationen aufzunehmen vermag.

4. Verbindung nach Anspruch 3,
dadurch gekennzeichnet, daß die Hülse (30; 80) in bezug auf das Anschlußstück (14) axial fixiert ist, und daß die Stützorgane der genannten Hülse wenigstens ein vorderes Verlängerungsstück (40, 41; 90, 91) des Anschlußstückes (14) umfassen, das sich in Achsenrichtung nach vorn über die Einführungsöffnung (14b) des genannten Anschlußstückes hinaus über einen Abstand erstreckt, der wenigstens gleich der Länge des zweiten Abschnitts (26b, 27b; 76b, 77b) der Verriegelungszunge ist und äußere radiale Abmessungen hat, die größer als die des zweiten Abschnitts (20) des Anschlußstückes (14) sind, um die Aufnahme (31; 81) für die Verriegelungszunge (26, 27; 76, 77) zu begrenzen, wobei das vordere Endstück der Hülse (30; 80) um das vordere Ende des genannten vorderen Verlängerungsstückes (40, 41; 90, 91) umgefalzt ist.

5. Verbindung nach Anspruch 4,
dadurch gekennzeichnet, daß der Ring (24) auf dem ersten Abschnitt (18) des Anschlußstückes (14) verschieblich angeordnet ist, und daß die Rückseite der Hülse um das hintere Ende des vorderen Verlängerungsstückes (40, 41) umgefalzt (30') ist.

6. Verbindung nach einem der Ansprüche 4 und 5,
dadurch gekennzeichnet, daß das vordere Ende des zweiten Abschnitts (26b, 27b) der Verriegelungszunge (26, 27) eine sich nach vorn erstreckende Rückhaltenase (42) aufweist, die mit dem Rand der Einführungsöffnung (30b) der Hülse (30) zusammenzuwirken vermag, um die Verriegelungszunge in ihrer Verriegelungsstellung zu halten.

7. Verbindung nach einem der Ansprüche 1 bis 6,
dadurch gekennzeichnet, daß der zweite Abschnitt (26b, 27b) der Verriegelungszunge (26, 27), bezogen auf den quergerichteten Schlitz (36b, 37b), auf der der vorderen Rampe (36a, 37a) entgegengesetzten Seite eine nach außen schräge hintere Rampe (36c, 37c) aufweist, die mit dem ersten Abschnitt (26a, 27a) verbunden und dazu bestimmt ist, mit dem Außenumfang der Einführungsöffnung des Anschlußstückes (14) zusammenzuwirken, um die genannte Zunge in ihre Konfiguration des entriegelten Zustands zu verbringen.

8. Verbindung nach einem der Ansprüche 1 bis 6,
dadurch gekennzeichnet, daß die Verriegelungszunge (76, 77) über den Ring (74) hinaus mit einer Betätigungsklammer (76c, 77c) versehen ist, die mit der genannten Verriegelungszunge eine relativ steife Baugruppe bildet, wobei das Ende der genannten Betätigungsklammer (76c, 77c) in der Konfiguration des freien Zustands der Verriegelungszunge (76, 77) vom Außenumfang des ersten Abschnitts (18) vom Anschlußstück (14) weggerückt ist.

9. Verbindung nach den Ansprüchen 4 und 8,
dadurch gekennzeichnet, daß die Axialanschläge des Ringes von einer Schulter (19) des Außenumfanges vom Anschlußstück (14) gebildet sind, und daß das hintere Endstück der Hülse (80) um den Ring (74) so umgefalzt ist, daß es den genannten Ring gegen die genannte Schulter blockiert.

## Claims

1. A quick connection for a tube (10) capable of being fitted in a connector (14), said tube presenting an annular swell (12) distant from its end (10a), while the connector presents an inner housing (34) intended to receive at least one O-ring (35) and provided in a region which, when the tube (10) is fitted in the connector (14), lies opposite that zone of said tube located between its end (10a) and the swell (12), and said connector comprises a locking member (22, 72) comprising locking means (26, 27; 76, 77) elastically deformable in the radial direction between a configuration in the free state and a configuration of unlocking,
characterized in that the outer periphery of the connector (14) presents a first cylindrical part (18), delimited towards the inlet (14b) of the connector, i.e. towards the front, by axial stop means (19, 30a), and a second part (20) extending between the axial stop means and the inlet of the connector (14),
in that the locking member (22; 72) comprises a ring (24; 74) capable of abutting on the axial stop means (19, 30a),
in that the locking means comprise at least one locking lug (26, 27; 76, 77) extending forwardly from said ring (24; 74) and comprising a first portion (26a, 27a; 76a, 77a), connected to the ring and of length at least equal to the length of the second part (20) of the connector (14), and a second portion (26b, 27b; 76b, 77b) constituted by a forward extension of said first portion (26a, 27a; 76a, 77a) and comprising, from front to rear, an inwardly inclined front ramp (36a, 37a; 86a, 87a) and a transverse slot (36b, 37b; 86b, 87b) whose axial dimension is at least equal to the axial dimension of the swell (12) of the tube (10) and of which the distance (D) to the axis (A) of the connector (14) is, in the free state of the locking lug (26, 27; 76, 77), less than the outer radius (R) of said swell (12), and
in that spacer means (36c, 37c; 76c, 77c) connected to the connector (14) are provided to bring the locking lug (26, 27; 76, 77) into its configuration of unlocking, in which the distance (D') from the slot (36b, 37b; 86b, 87b) to the axis (A) of the connector (14) is at least equal to said radius (R) of the swell (12) of the tube (10).

2. The connection according to claim 1, characterized in that the front edge of the slot (36b, 37b; 86b, 87b) is provided with a rearwardly extending bearing catch (39; 89).

3. The connection according to one of claims 1 and 2, characterized in that it comprises a sleeve (30; 80) covering the connector (14) and mounted on support means (40, 41; 90, 91) fast therewith, this sleeve (30; 80) extending axially towards the front beyond the inlet (14b) of the connector (14), and presenting an inlet (30b) coaxial to that of said connector (14), thus forming a chamber (31; 81) adapted to contain the locking lug (26, 27; 76, 77) in all its configurations.

4. The connection according to claim 3, characterized in that the sleeve (30; 80) is fixed axially with respect to the connector (14), and in that the means for supporting said sleeve comprise at least one forward extension (40, 41; 90, 91) of the connector (14) extending axially towards the front beyond the inlet (14b) of said connector, over a distance at least equal to the length of the second portion (26b, 27b; 76b, 77b) of the locking lug and presenting outer radial dimensions greater than those of the second part (20) of the connector (14) in order to define a housing (31; 81) for the locking lug (26, 27; 76, 77), the front end of the sleeve (30; 80) being crimped on the front end of said forward extension (40, 41; 90, 91).

5. The connection according to claim 4, characterized in that the ring (24) is mounted to slide on the first part (18) of the connector (14), and in that the rear of the sleeve is crimped (30') on the rear end of the forward extension (40, 41).

6. The connection according to any one of claims 4 and 5, characterized in that the front end of the second portion (26b, 27b) of the locking lug (26, 27) presents a forwardly extending retaining catch (42) capable of cooperating with the edge of the inlet (30b) of the sleeve (30) to maintain the locking lug in its locked position.

7. The connection according to any one of claims 1 to 6, characterized in that the second portion (26b, 27b) of the locking lug (26, 27) comprises, on the side opposite the front ramp (36a, 37a) with respect to the transverse slot (36b, 37b), an outwardly inclined rear ramp (36c, 37c), connected to the first portion (26a, 27a) and intended to cooperate with the outer periphery of the inlet of the connector (14b) to bring said lug into its configuration of unlocking.

8. The connection according to any one of claims 1 to 6, characterized in that the locking lug (76, 77) is extended, beyond the ring (74), by a control lug (76c, 77c) which forms with said locking lug a relatively rigid assembly, the end of said control lug (76c, 77c) being spaced from the outer periphery of the first part (18) of the connector (14) in the configuration of the locking lug (76, 77) in the free state.

9. The connection according to claims. 4 and 8, characterized in that the means for axial stop of the ring are constituted by a shoulder (19) of the outer periphery of the connector (14), and in that the rear end of the sleeve (80) is crimped on the ring (74) so as to block said ring against said shoulder.
